(19) Europäisches Patentamt
European Patent Office
Office européen des brevets

(11) Numéro de publication : **0 432 018 A1**

(12) **DEMANDE DE BREVET EUROPEEN**

(21) Numéro de dépôt : **90403380.0**

(22) Date de dépôt : **28.11.90**

(51) Int. Cl.[5] : **C02F 1/56**, C02F 1/28, C08F 8/32

(30) Priorité : **06.12.89 FR 8916118**

(43) Date de publication de la demande :
**12.06.91 Bulletin 91/24**

(84) Etats contractants désignés :
**AT BE CH DE DK ES FR GB GR IT LI LU NL SE**

(71) Demandeur : **ATOCHEM**
**4 & 8, Cours Michelet La Défense 10**
**F-92800 Puteaux (FR)**

(72) Inventeur : **Audebert, Roland**
**16, rue du Prince de Condé**
**F-95320 Saint Leu La Foret (FR)**
Inventeur : **Suty, Hervé**
**10, Boulevard De Polangis**
**F-94500 Champigny Sur Marne (FR)**
Inventeur : **Ferrer, Eric**
**53, Avenue Raymond Aron**
**F-92160 Antony (FR)**

(54) **Procédé de traitement des eaux avec floculation et adsorption simultanées à l'aide de polyélectrolytes partiellement hydrophobes.**

(57) La présente invention concerne un procédé de traitement des eaux mettant en oeuvre des gels (I) et/ou des polymères cationiques qui sont à la fois des agents floculants et des agents adsorbants.

(I)

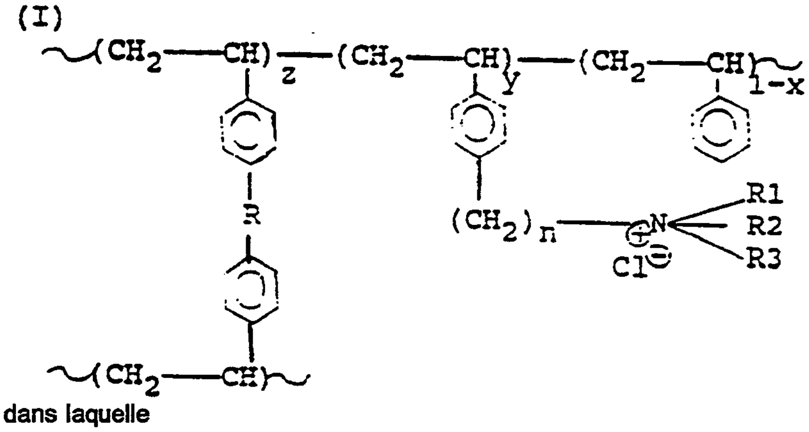

dans laquelle
$x = y - z$
$0 < y < 1$
$0 < z < 0{,}1$
$1 \leq n \leq 5$ et de préférence $n \leq 2$

EP 0 432 018 A1

# PROCEDE DE TRAITEMENT DES EAUX AVEC FLOCULATION ET ADSORPTION SIMULTANEES A L'AIDE DE POLYELECTROLYTES PARTIELLEMENT HYDROPHOBES

La présente invention concerne un procédé de traitement des eaux par des polyélectrolytes partiellement hydrophobes qui sont simultanément des agents floculants et des agents adsorbants.

Le traitement des eaux, notamment industrielles urbaines et potables consiste à éliminer notamment des particules en suspension, des germes pathogènes et des molécules en solution qui peuvent s'avérer dangereuses lors de la consommation de l'eau ou pour l'environnement dans le cas de rejets.

Parmi les procédés pour éliminer les éléments ci-dessus on trouve :

– la coagulation ou floculation qui permet le rassemblement des particules en suspension (argile, silice...) sous forme de gros flocons ou flocs, suivie d'une décantation puis d'une filtration permettant l'élimination des flocs.

A titre d'exemple d'agents floculants, on peut citer le chlorure ferrique, le sulfate d'alumine, les sels d'aluminium et notamment ceux décrits dans la demande de brevet EP 327 419, des polyélectrolytes solubles dans l'eau tels que des produits obtenus par chlorométhylation de polystyrène puis amination à l'aide d'une amine tertiaire comme décrits dans C.A.S 94(16) 122281d, C.A.S 89(12) 908 26p, C.A.S 78(10) 62 023d.

– l'oxydation qui a essentiellement pour but d'éliminer des matières organiques et de désinfecter l'eau en détruisant les germes pathogènes au moyen par exemple de $H_2O_2$, $O_3$, $Cl_2$, $ClO_2$, Na ClO.

– l'élimination de molécules organiques en solution telles que des composés aromatiques par adsorption avec des adsorbants tels que le charbon actif qui peuvent également jouer le rôle de filtre pour les matières résiduelles en suspension.

Comme indiqué ci-dessus, les différents procédés visent à éliminer des particules ou éléments indésirables. Pour mener à bien le traitement complet des eaux naturelles, il faudra très souvent utiliser les 3 procédés décrits ci-dessus.

L'invention, objet de la présente demande consiste en un procédé de traitement des eaux naturelles ou résiduaires qui permet d'éliminer simultanément les particules en suspension ainsi que des composés organiques en solution.

Le procédé met en oeuvre des polyélectrolytes partiellement hydrophobes qui sont à la fois des agents floculants pour des particules minérales et/ou organiques en suspension et des agents adsorbants pour des composés organiques dissous.

Les agents floculants et adsorbants mis en oeuvre dans le procédé de la demanderesse sont des polyélectrolytes partiellement hydrophes.

Ils peuvent être choisis parmi :

– les gels de polystyrène cationiques

– et/ou les polymères cationiques linéaires.

Les gels de polystyrène cationiques conformes à l'invention sont des polymères de polystyrène partiellement réticulés, portant des groupements alkylamines, de préférence méthyl- ou éthylamines qui peuvent être représentés par la formule suivante (I) :

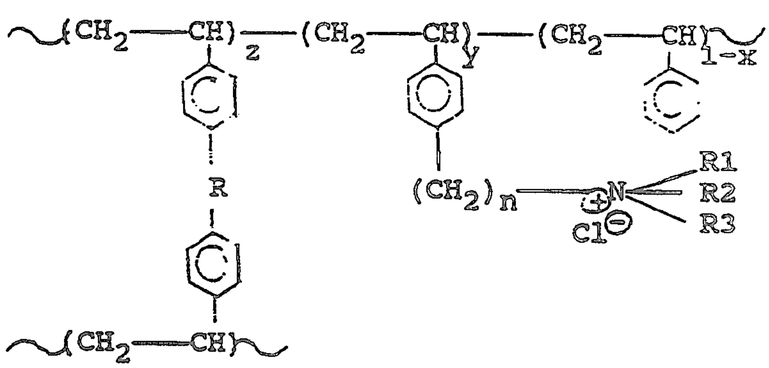

dans laquelle

$x = y + z$

$0 < y < 1$

$0 < z < 0,1$

$1 \leq n \leq 5$ et de préférence $n \leq 2$ et $R_1$, $R_2$ et $R_3$ identiques ou différents, étant un atome d'hydrogène ou un groupement alkyle ayant de 1 à 10 atomes de carbone, de préférence méthyle ou éthyle ou hydrogène.

La synthèse des produits portant des groupements méthylammonium est notamment décrite dans la demande de brevet FR 2 190 860.

R peut être le résultat d'un pontage chimique entre les chaînes ou peut provenir de réactions secondaires lors du procédé d'amination.

Le taux de réticulation TR est défini par

**TR (%) = 100 X z**

Le taux de cationicité TC est défini par

**TC (%) = 100 X y.**

Le taux de gonflement Q du gel cationique dans l'eau désionisée est exprimé en g d'eau absorbée par g de polymère sec.

Les polymères cationiques linéaires conformes à l'invention sont des polymères cationiques dérivés du styrène qui répondent notament à la formule suivante :

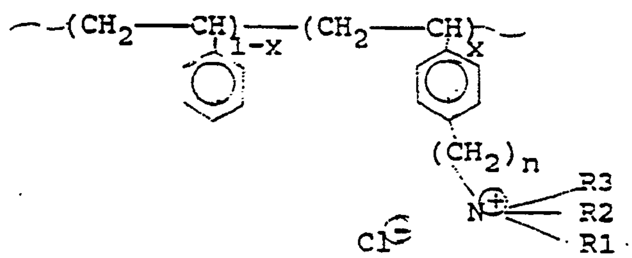

dans laquelle

$0,3 \leq x \leq 1$

$1 \leq n \leq 5$ et de préférence $n \leq 2$

$R_1$, $R_2$ et $R_3$ identiques ou différents, étant un atome d'hydrogène ou un groupement alkyle ayant de 1 à 10 atomes de carbone, et de préférence éthyle ou méthyle.

Ils peuvent être obtenus par substitution nucléophile du chlore par une amine ou par l'ammoniac effectuée sur des (co)polymères de chloroalkylstyrène (et de styrène).

Le taux de cationicité TC des polymères cationiques linéaires est défini par

**TC (%) = 100 X x.**

Comme indiqué ci-dessus, les polyélectrolytes partiellement hydrophobes sont susceptibles d'éliminer simultanément des particules en suspension et des composés organiques ou micropolluants en solution dans l'eau.

La mise en oeuvre du procédé de traitement des eaux selon l'invention à l'aide des agents floculants et adsorbants ci-dessus peut d'une manière générale être similaire à celle des procédés utilisants des sels d'aluminium comme agents floculants. On introduit le ou les agents floculants et adsorbants au sein du milieu aqueux à traiter puis on agite afin d'assurer une bonne dispersion et un bon contact du ou des agents avec les particules et composés à éliminer.

On ajuste l'agitation de manière à maintenir un bon compromis entre le développement des flocs et leur destruction mécanique dûe à une agitation trop rapide.

On laisse décanter les flocs, filtre et récupère le surnageant purifié.

La quantité d'agent floculant et adsorbant nécessaire pour purifier l'eau dépend de son taux de cationité TC et de son taux de réticulation (dans le cas les gels cationiques).

D'une manière générale, plus TC est élevé, moins la quantité d'agent floculant et adsorbant nécessaire à la floculation/adsorption est élevée.

Les gels de polystyrène partiellement réticulés et portant des groupements alkylamines selon l'invention sont de bons agents adsorbants et ce, sans qu'il y ait de particules en suspension présentes dans le milieu susceptibles de floculer.

En outre, ils présentent l'avantage, par rapport au charbon actif d'adsorber plus rapidement les composés dissous.

Les exemples suivants illustrent l'invention vans toutefois la limiter.

## EXEMPLE 1

### A - Effet d'adsorption des gels

Dans un tube vissé avec capsule en Téflon[R], on prépare une suspension aqueuse de gel (ECHANTILLONS A à D) de concentration comprise entre 0,1 et 0,35 g de gel sec/l d'eau désionisée.

On ajoute une solution de pyrène dans l'éthanol (concentration 122,5 mg de pyrène/l d'éthanol). La concentration de pyrène au sein de la suspension est égale à 0,15 ppm.

On agite la suspension pendant environ une heure par agitation rotative du tube (≃1 tr/ 10 sec.). On sépare ensuite le surnageant du gel par filtration à travers une grille métallique d'ouverture 63 µm sous pression atmosphérique.

Les gels des ECHANTILLONS A à D sont des polystyrènes partiellement réticulés portant des groupements méthylammonium avec $R_1 = R_2 = R_3 = H$.

Ils sont préparés selon la demande de brevet FR 2 190 860 et leurs caractéristiques sont indiquées ci-dessus.

| N° ECH. | TR (%) | TC (%) | Q (g/g) |
|---|---|---|---|
| A | 1 ± 0,5 | 92 ± 5 | 300 ± 30 |
| B | 2 ± 0,5 | 92 ± 5 | 120 ± 10 |
| C | 3 ± 0,5 | 92 ± 5 | 70 ± 10 |
| D | 2 ± 0,5 | 50 ± 5 | 40 ± 5 |

On dose le pyrène contenu dans le surnageant par spéctroscopie UV et calcule l'adsorption A du micropolluant par le gel :

$$A\ (\%) = 100 \times \frac{\text{concentration initiale - conc. du surnageant en micropolluant}}{\text{concentration initale}}$$

$$= 100 \times \frac{Cp - Cs}{Cp}$$

B - Effets d'adsorption et floculation des gels

Dans un tube vissé avec capsule en Teflon, on prépare une suspension aqueuse de silice de concentration en silice égale à 4 g par l d'eau désionisée.

La silice, utilisée, lavée avec de l'eau désionisée préalablement à son utilisation, est une silice de précipitation, constituée de particules sphériques de rayon compris pour 90 % d'entre elles entre 10 et 80 nm et correspondant à une moyenne en nombre de 33 nm. Sa surface spécifique est de 35 $m^2/g$ et sa masse volumique de 2,2 $g/cm^3$.

L'ajout du micropolluant est effectué de façon identique à celle décrite en 1.A. On agite rapidement pendant 30 secondes afin d'homogénéiser la suspension puis par agitation rotative du tube (≃20 trs/mn) pendant 30 mn.

On dose la concentration $C_S$ du micropolluant (pyrène) dans le surnageant après centrifugation par spectroscopie UV. On calcule l'adsorption correspondant à chaque $C_p$.

Les gels testés sont les ECHANTILLONS A à D tels que définis dans l'EXEMPLE 1.A.

Les valeurs d'adsorption sont identiques à celles obtenues sous A (voir Tableau I).

Pour les ECHANTILLONS A, C et D, on détermine l'optimum de floculation o.f.c correspondant au rapport de la quantité minimale d'agent floculant et absorbant à introduire dans l'eau pour floculer la quantité maximale de particules en suspension. L'o.f.c est exprimé en mg de gel sec introduit par g de silice éliminée.

Les résultats sont réunis dans le Tableau II.

On reprend le gel sec de l'Echantillon B et le broie pendant 10 mn selon le procédé Ultra- Turrax[R] à vitesse

faible d'une part et à une vitesse élevée d'autre part. Pour chacun des broyages, on mesure l'o.f.c ; les résultats sont réunis dans le Tableau III

**EXEMPLE 2**

A - Effet d'adsorption des gels

On reprend le mode opératoire décrit dans l'Exemple 1.A en utilisant la 1-hydroxyanthraquinone comme micropolluant présent dans la suspension aqueuse à raison de 0,7 ppm.

On mesure l'adsorption de la 1-hydroxyanthraquinone selon la méthode indiquée en 1.A sur les Echantillons A, B et D.

Les résultats sont réunis dans le Tableau IV.

**EXEMPLE 3**

A - Effets d'adsorption et floculation des polymères linéaires

On prépare une suspension aqueuse de silice de concentration en silice égale à 5,3 g/l d'eau désionisée. La silice utilisée a les mêmes caractéristiques que celles décrites en 1.B.

On prépare une solution aqueuse de polymère (ECHANTILLONS E à H) ainsi qu'une solution de pyrène dans l'éthanol (concentration 122,5 mg/l) que l'on ajoute à la suspension dans les mêmes conditions que décrites en 1.B.

On fait varier la concentration de polymère dans le milieu entre 0,01 et 0,2 g/l, la concentration en pyrène étant fixée à 0,15 ppm.

Les polymères des Echantillons E à H sont obtenus par (co)polymérisation radicalaire de chlorométhylstyrène (et de styrène) suivie d'une substitution nucléophile du chlore par la triéthylamine en présence de chloroforme.

Leurs caractéristiques sont reprises ci-dessous.

| N° ECH. | TC (%) | $\overline{Mw}$ |
|---|---|---|
| E | 100 | 18 000 |
| F | 77 | 7 500 |
| G | 45 | 10 000 |
| H | 35 | 10 000 |

On agite rapidement la suspension pendant environ 1 heure puis le surnageant est séparé des flocs par centrifugation (15.000 g pendant 1 heure).

Pour chaque $C_p$, on dose la concentration $C_S$ du micro-polluant (pyrène) dans le surnageant par spectroscopie UV et calcule l'adsorption A correpondante.

Les résultats sont réunis dans le Tableau V.

On mesure l'o.f.c pour chacun des Echantillons E à H. L'o.f.c est exprimé en g de polymère introduit par g de silice éliminée.

Les résultats sont réunis dans le Tableau VI.

B - Effets de floculation des polymères linéaires

On prépare une eau synthétique type eau de Seine constituée de :

| | |
|---|---|
| - eau bipermutée filtrée sur 0,45 µm | 2 l |
| - $Na_2CO_3$ | 672 mg |
| - $Na_2SO_4$ | 148 mg |
| - $CaCl_2$, $6H_2O$ à 80 g/l de $Ca^{2+}$ | 2 ml |
| - $MgCl_2$, $6H_2O$ à 48,6 g/l de $Mg^{2+}$ | 0,5 ml |
| - acide humique (sel disodique de la Société Aldrich) | 28 mg |
| - bentonite | 100 mg |

L'eau synthétique a un pH égal à 8,36, sa turbidité est égale à 10,5 NTU et sa teneur en matières organiques correspond à 8,6 mg $O_2$/l.

Cette eau synthétique est traitée par les gels des Echantillons E et H et par un chlorosulfate basique d'aluminium (ECHANTILLON I) contenant (% en poids) :

| | |
|---|---|
| $Al^{3+}$ | 10 (exprimé en $Al_2O_3$) |
| $Cl^-$ | 9,32 |
| $SO_4^{2-}$ | 2,25 |
| $Ca^{2+}$ | 0,21 |
| basicité | 47 % |

On effectue des essais de floculation en jar-tests selon le mode opératoire suivant :

– becher d'un litre,

– température 15°C

– eau synthétique,

– jar-test HYDROCURE type SLH6

– agitation rapide pendant 1 mn 30' après addition de l'agent floculant puis agitation lente de 13 mn 30', c'est-à-dire suffisante pour qu'il y ait coalescence, mais en évitant la décantation des flocs.

On laisse ensuite décanter 30 mn puis filtre le surnageant.

On mesure la turbidité en NTU pour différents taux d'agent floculant introduits.

Les résultats sont réunis dans le Tableau VII.

TABLEAU I

| | | N° ECHANTILLONS | |
|---|---|---|---|
| A (%) | | A, B ET C | D |
| Cp (g/l) | 0,05 | 40 ± 10 | 70 ± 8 |
| | 0,1 | 60 ± 10 | 90 ± 10 |
| | 0,3 | 85 ± 10 | 95 ± 5 |
| | 0,4 | 90 ± 10 | 95 ± 5 |

TABLEAU II

| N° ECH. | o.f.c (mg/g) |
|---|---|
| A | 250 |
| C | 700 |
| D | 1 800 |

TABLEAU III

| Type de broyage | o.f.c (mg/g) |
|---|---|
| pas de broyage | 700 |
| broyage à petite vitesse | 250 |
| broyage à grande vitesse | 190 |

TABLEAU IV

| A (%) | | N° ECHANTILLONS | | |
|---|---|---|---|---|
| | | A | B | D |
| Cp | 0,1 | 17 ± 5 | 20 ± 5 | 35 ± 5 |
| (g/l) | 0,5 | 30 ± 10 | 35 ± 10 | 60 ± 10 |
| | 1 | 40 ± 10 | 40 ± 10 | 80 ± 10 |

TABLEAU V

| A (%) | | N° ECHANTILLONS | | |
|---|---|---|---|---|
| | | E et F | G | H |
| Cp (g/l) | 0,025 | 15 ± 5 | 60 ± 5 | |
| | 0,05 | 25 ± 5 | 70 ± 10 | 87 ± 10 |
| | 0,065 | 27 ± 5 | 73 ± 10 | 91 ± 10 |
| | 0,1 | 40 ± 5 | 78 ± 10 | 93 ± 10 |
| | 0,12 | 40 ± 5 | 80 ± 10 | 94 ± 10 |
| | 0,15 | | | 90 ± 10 |

TABLEAU VI

| N° ECH. | o.f.c (mg/g) | A (%) |
|---|---|---|
| E | 8 | 20 ± 5 |
| F | 12 | 30 ± 5 |
| G | 16 | 80 ± 10 |
| H | 18 | 94 ± 10 |

TABLEAU VII

| Turbidité du surnageant | quantité de floculant * $(g/m^3)$ | | | | | |
|---|---|---|---|---|---|---|
| (NTU) | 0,5 | 1 | 2 | 3 | 4 | 5 |
| N° ECHAN/ | | | | | | |
| E | 3,1 | 2 | 1,8 | 1,7 | 1,65 | 1,8 |
| H | | | 4,9 | 3,2 | | 2 |
| I | | | | 1,6 | | |

* pour le chlorosulfate basique d'aluminium elle est exprimée en g d'$Al_2O_3/m^3$.

Les résultats d'adsorption indiqués dans les Tableaux I, IV et V, et sont des moyennes calculées à partir d'une dizaine de mesures.

## Revendications

1. Agent floculant et adsorbant, caractérisé en ce qu'il est choisi parmi les produits représentés par les formules suivantes :

(I)

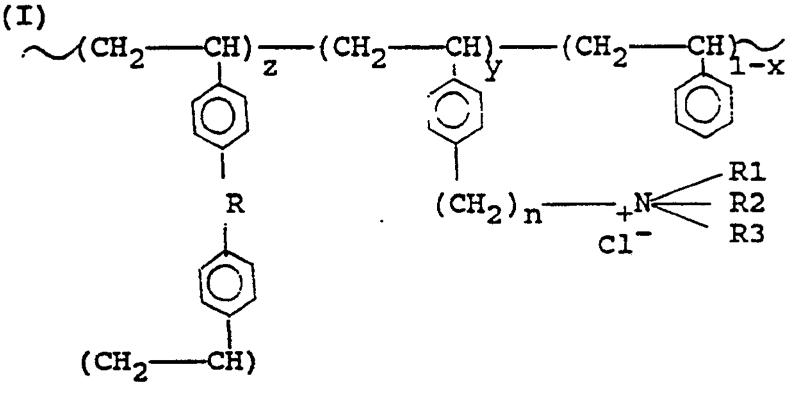

dans laquelle
$x = y + z$
$0 < y < 1$
$0 < z < 0,1$
$1 \leq n \leq 5$ et de préférence $n \leq 2$ et $R_1$, $R_2$ et $R_3$ identiques ou différents, étant un atome d'hydrogène ou un groupement alkyle ayant de 1 à 10 atomes de carbone, de préférence méthyle ou éthyle ou hydrogène

et (II)

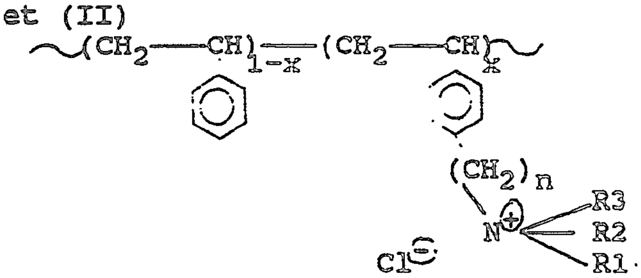

dans laquelle
$0{,}3 \leq x \leq 1$
$1 \leq n \leq 5$ et de préférence $n \leq 2$ $R_1$, $R_2$ et $R_3$ identiques ou différents, étant un atome d'hydrogène ou un groupement alkyle ayant de 1 à 10 atomes de carbone, et de préférence éthyle ou méthyle.

2. Procédé de traitement des eaux, caractérisé en ce qu'il met en oeuvre au moins un agent floculant et adsorbant tel que défini dans la revendication 1.

3. Procédé selon la revendication 2 pour le traitement des eaux contenant du pyrène et/ou de l'1-hydroxyanthraquinone.

4. Procédé selon la revendication 2 ou 3 pour le traitement des eaux contenant de la silice et/ou de la bentonite.

Office européen des brevets

# RAPPORT DE RECHERCHE EUROPEENNE

Numero de la demande

EP 90 40 3380

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A- 967 607 (DOW CHEMICAL)<br>* Page 1, lignes 11-33; page 2, lignes 54-66; page 2, ligne 120 - page 3, ligne 19 *<br>--- | 1,2 | C 02 F 1/56<br>C 02 F 1/28<br>C 08 F 8/32 |
| A | FR-A-1 471 426 (ICI)<br>* Page 1, colonne de droite, lignes 2-24; page 2, colonne de gauche, lignes 15-24 *<br>--- | 1,2 | |
| A | FR-A-2 234 233 (BAYER)<br>* Page 8, revendications 1,3,6 *<br>--- | 1,2 | |
| D,A | CHEMICAL ABSTRACTS, vol. 94, no. 16, 20 avril 1981, page 24, abrégé no. 122281d, Columbus, Ohio, US; & RO-A- 68 694 (INSTITUTUL DE CHIMIE MACROMOLECULARA "PETRU PONI") 26-11-1979<br>----- | 1,2 | |
| | | | DOMAINES TECHNIQUES RECHERCHES (Int. Cl.5) |
| | | | C 02 F |

Le présent rapport a été établi pour toutes les revendications

| Lieu de la recherche | Date d'achèvement de la recherche | Examinateur |
|---|---|---|
| LA HAYE | 13-02-1991 | TEPLY J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)